# EUROPÄISCHE PATENTANMELDUNG

(11) **EP 2 980 371 A1**
(43) Veröffentlichungstag der Anmeldung: **03.02.2016**
(21) Anmeldenummer: 13879999.4
(22) Anmeldetag: 21.06.2013
(51) Int. Cl.: F01K 23/04

(54) **VERFAHREN ZUR ENERGIEUMWANDLUNG MIT BRENNSTOFFREGENERIERUNG IN EINEM CYCLISCHEN VERFAHREN EINER WÄRMEKRAFTMASCHINE**

(30) Priorität: 27.03.2013 RU 2013113358
(71) Anmelder: Barchan, Gennadij Pavlovich, Lobnya, Moskovskaya obl. 141730 (RU)
(72) Erfinder: Barchan, Gennadij Pavlovich, Lobnya, Moskovskaya obl. 141730 (RU)
(74) Vertreter: Jeck, Anton
(86) Internationale Anmeldenummer: PCT/RU2013/000529
(87) Internationale Veröffentlichungsnummer: WO 2014/158054

(57) **Zusammenfassung**

Die Erfindung ist in der Energietechnik einsetzbar. Bei dem Verfahren zur Umwandlung mit einer Rückgewinnung von Energieträgern in einem Kreisprozess einer Wärmekraftmaschine wird ein erster Umlaufkreis gebildet: Gasgenerator (1) - Einrichtung (4) zur Umwandlung von kinetischer und Wärmeenergie in mechanische Energie - Hydrierungsreaktor (5) - Gasgenerator (1). Das Wasser wird in Dampfkesseln (2, 6) verdampft, und der Wasserdampf wird dann in eine Einrichtung (7) zur Umwandlung der Wasserdampfenergie in mechanische Energie, z. B. in eine Turbine, gefördert. Dabei werden die Dampfkessel (2, 6) im Gasgenerator (1) und im Hydrierungsreaktor (5) angeordnet. Der Dampf wird von der Umwandlungseinrichtung (4) in einen Kondensator (8) weitergeleitet, wobei ein zweiter Umlaufkreis gebildet wird. Dem Gasgenerator (1) wird Luftsauerstoff von einem Luftgebläse zugeführt. Die Luft wird gekühlt, der Kühlvorgang wird wiederholt, bis ein Wasserrestgehalt in der Luft von max. 0,2 g/m³ erreicht wird. Das gebildete Kondensat wird gesammelt und zur Speisung der Dampfkessel (2, 6) verwendet. Die Erfindung ermöglicht es, den Prozess der Rückgewinnung der Kohlenoxide zu vereinfachen, die in den Wärmekraftmaschinen gebildet werden.

## Beschreibung

Die Erfindung betrifft ein Verfahren zur Umwandlung mit einer Rückgewinnung von Energieträgern in einem Kreisprozess einer Wärmekraftmaschine nach dem Oberbegriff des Anspruchs 1.

Die Erfindung ist in der Energietechnik einsetzbar, und zwar für Verfahren zur Umwandlung von innerer Energie von Kohlenwasserstofftreibstoffen in mechanische Arbeit.

Die bekannten modernen Verfahren zur Wärmeenergieherstellung, bis auf Atomkern-, Kernfusions-, Sonnen- und Thermalenergie, beruhen auf einer direkten Verbrennung der Energieträger. Es handelt sich also um eine vollständige Oxidation aller brennbaren Treibstoffbestandteile (s. z. B. Stermann L.S. et al. "Wärme- und Atomkraftwerke", M., Energoisdat, 1982).

Trotz ihrer Vielfältigkeit haben die Mängel dieser bekannten Verfahren einen gemeinsamen Charakter und umfassen Folgendes:
- Es ist nicht möglich, Abfälle mit einem Wassergehalt von über 75 % zu verarbeiten.
- Der theoretische Wirkungsgrad der besten Wärmekraftanlagen liegt höchstens bei 75 %, und der effektive Wirkungsgrad beträgt max. 35 %.
- Die in die Außenluft emittierten Abgase verschmutzen die Umwelt und beeinträchtigen global das Leben auf der Erde.
- Die nicht erneuerbaren Naturschätze, wie Brennstoffressourcen, werden uneffektiv genutzt.
- Die Biomasse von Pflanzen und der Ausscheidungsprodukte des Menschen und der Tiere werden zur Energieerzeugung nur gelegentlich und uneffektiv verwendet.

Aus dem Stand der Technik ist ein Verfahren zur Verwertung der in einem thermochemischen Kreisprozess gewonnenen Energie und ihrer Umsetzung in mechanische Energie bekannt. Nach diesem Verfahren wird ein Wasserstoff-Kohlenoxid-Gemisch (ein einem Motor zugeführter Energieträger) mit Molverhältnis 3 : 1 aus einem Behälter in eine Reaktoranlage gefördert. Hier entsteht Methan-Wasserdampfgemisch (Arbeitsmedium) im Laufe einer katalytischen Reaktion. Dieses wird in den Arbeitsraum des Motors gefördert. Aufgrund der Gemischausdehnung wird mechanische Energie erzeugt. Das abgenutzte Methan- Wasserdampfgemisch fließt in die Kühlung eines gasgekühlten Hochtemperatur-Atomreaktors, welcher sich außerhalb des Motors befindet. Hier verwandelt sich das Methan-Wasserdampfgemisch in den ursprünglichen Wasserstoff und Kohlenoxid (s. Anmeldung WO 03/091549, KI. F01K25/06, 06.11.2003).

Dieses Verfahren führt im Vergleich zu den bekannten Verfahren zu einer beachtlichen Senkung des Treibstoffverbrauchs, weist jedoch folgende Mängel auf:
- Um den kreisläufigen Prozessablauf zu bekommen, muss eine Hochtemperatur-Wärmeenergiequelle außerhalb des Motors vorhanden sein.
- Das Verfahren kann nur ortsfest und in unmittelbarer Nähe zu einer Hochtemperatur-Energiequelle durchgeführt werden.
- Bei diesem Verfahren können andere Arten von kohlenstoffhaltigen Rohstoffen nicht verwendet werden.
- Nach diesem Verfahren können keine leitungsgetrennten Fahrzeugmotoren versorgt werden.
- Der Energieträger (Wasserstoff-Kohlenoxid-Gemisch) muss in einem Spezialbetrieb hergestellt werden.

Aus dem Stand der Technik ist ein Verfahren zur Umwandlung der bei einem exothermen Prozess freiwerdenden Energie in mechanische Arbeit bekannt. Dieses Verfahren umfasst die Zuführung eines Ausgangsrohstoffs zu einem ersten Reaktor (Gasgenerator) und eine Zusammenwirkung der Rohstoffkomponenten in einem exothermen Prozess. Dadurch entstehen Wasserstoff und Kohlenoxid. Diese werden in eine Reaktor-Methanisierungsanlage (Spezialfall eines Fischer-Tropsch-Reaktors) gefördert. Hier wird Arbeitsmedium mittels einer katalytischen Reaktion gebildet. Beim Arbeitsmedium handelt es sich um ein Methandampfgemisch. Während seiner Ausdehnung wird im Motor mechanische Arbeit geleistet. Das abgenutzte Arbeitsmedium wird in einen zweiten Reaktor zur Rückgewinnung gefördert und dann zum ersten Reaktor zurückgeführt. Dabei wird der Ausgangsrohstoff im ersten Reaktor einer autothermen oder thermischen Vergasung mit Wasserstoff- und Kohlenoxid-Freisetzung ausgesetzt. Der Wasserstoff und das Kohlenoxid werden in die Reaktor-Methanisierungsanlage von Nebenprodukten gefördert. Die katalytische Reaktion zwischen Wasserstoff und Kohlenoxid wird bei einer Temperatur von 600 K bis 1400 K und einem Druck zwischen 0,6 und 20 MPa (Patent RU 2323351, Kl. F01K23/04, 27.04.2008) durchgeführt.

Das genannte Verfahren hat folgende Mängel:
- Die sich bei der Reforming bzw. Vergasung des Ausgangsrohstoffs im Gasgenerator freisetzenden Gase und Energie werden nicht benutzt.
- Die plasmachemische Reforming oder die Vergasung werden nur zur Verarbeitung von Wassermischungen verwendet.
- Der Methanisierungsprozess ist bei einer Temperatur von über 700 K mit handelsüblichen Katalysatoren schwer durchführbar.
- Die Temperatur- und Druckbegrenzung zwischen 600 K und 1400 K und 0,6 - 20 MPa begrenzt die erreichbaren Ergebnisse wesentlich.

Der der Erfindung nächstkommende Stand der Technik seinem technischen Wesen und dem erreichbaren Effekt nach ist ein Verfahren zum Umwandlung mit einer Rückgewinnung von Energieträgern in einem Kreisprozess einer Wärmekraftmaschine. Bei diesem Verfahren werden Kohlenwasserstofftreibstoff und Sauerstoff einem Gasgenerator zugeführt. Dabei wird der Treibstoff vergast oder unter autothermen oder thermischen Bedingungen umgewandelt, wodurch ein Wasserstoff-Kohlenoxid-Gemisch entsteht. Das resultierende Wasserstoff-Kohlenoxid-Gemisch wird in eine Vorrichtung transportiert, um seine kinetische und Wärmeenergie in mechanische Energie umzusetzen. Danach fließt das Wasserstoff-Kohlenoxid-Gemisch in einen Hydrierungsreaktor. Hier werden Kohlenwasserstoffe und Pyrogenwasser unter einem katalytischen Prozess gebildet. Diese werden über eine Energieumwandlungseinrichtung in einen Gasgenerator zur Umwandlung gefördert, wobei auf eine solche Weise ein erster Umlaufkreis gebildet wird und zwar: Gasgenerator - Einrichtung zur Umwandlung von kinetischer Energie in mechanische Energie - Hydrierungsreaktor - Einrichtung zur Umwandlung von Wärme- und kinetischer Gasenergie in mechanische Energie - Gasgenerator. Das Wasser wird in einem durch Vergasungs- und Hydrierungsprodukte erwärmten Dampfkessel verdampft und in eine Einrichtung zur Dampfenergieumwandlung in mechanische Energie, z. B. in eine Turbine, gefördert (Patent RU 2386819, Kl. F01K23/04, 20.04.2010).

Bei dieser bekannten technischen Lösung gelingt es, eine Reihe von Kenndaten zu verbessern und die dem zyklischen Rückgewinnungsverfahren eigenen Mängel zu beseitigen, die während der Umsetzung des Verfahrens in der Praxis erkannt worden sind.

Allerdings wurden folgende Mängel festgestellt:
- Methan ist kein Zielprodukt dieser technischen Energieanlage. So führt der Einsatz der Methanisierungsanlage zwecks Kohlenoxid-Rückgewinnung dazu, dass der Energieselbstverbrauch aufgrund der Verdichtung (Komprimieren) des heißen Methan-Dampfgemischs zunimmt und dass die Kosten für die Ausrüstung nach diesem Verfahren steigen.
- Das Molverhältnis von Wasserstoff zu Kohlenoxid beträgt im Synthesegas (Produktgas) 3 : 1. Das begrenzt die Anwendbarkeit des Verfahrens.
- Der verfahrenstechnisch obligatorische Einsatz des plasmachemischen Verfahrens ist nicht immer zweckmäßig, denn das beschränkt die Anwendung von anderen Vergasungsverfahren für Ausgangsrohstoffe.
- Die verfahrenstechnisch vorausgesetzte Nutzung von Edelgasen oder ihren Mischungen vermindert die Leistungsfähigkeit der Gasgeneratoren und Reaktoren zur Hydrierung der Kohlenoxide.

Es ist Aufgabe der Erfindung, ein Verfahren zur Umwandlung mit einer kreisläufigen Kohlenoxid-Rückgewinnung in Verbrennungskraftmaschinen und Dampfkesselanlagen zu entwickeln, bei der eine Gewinnung und Verarbeitung mit kohlenwasserstoffhaltigen Rohstoffen einschließlich Gasen, verschiedenen Stoffgemischen sowie Industrie- und Haushaltsabfällen möglich ist.

Der technische Effekt ist eine Vereinfachung des Rückgewinnungsablaufs der Kohlenoxide, die in Wärmekraftmaschinen oder Dampfkesselanlagen oder bei verschiedenen verfahrenstechnischen Prozessen entstehen.

Die gestellte Aufgabe wird durch die Merkmale des Anspruchs 1 gelöst.

Die Aufgabe wird in einem Verfahren zur Umwandlung mit einer Rückgewinnung von Energieträgern in einem Kreisprozess einer Wärmekraftmaschine gelöst. Nach diesem Verfahren werden Kohlenwasserstofftreibstoff und Sauerstoff einem Gasgenerator zugeführt. Hier wird der Treibstoff vergast oder unter autothermen oder thermischen Bedingungen umgewandelt, so dass ein Wasserstoff-Kohlenoxid-Gemisch entsteht. Das produzierte Wasserstoff-Kohlenoxid-Gemisch fließt in eine Einrichtung zur Umwandlung seiner kinetischen und Wärmeenergie in mechanische Energie. Danach wird das Wasserstoff-Kohlenoxid-Gemisch in einen Hydrierungsreaktor gefördert. Hier werden Kohlenwasserstoffe und Pyrogenwasser in einem katalytischen Prozess gebildet, die nachher in einen Gasgenerator zur Umwandlung befördert werden. Somit entsteht ein erster Umlaufkreis: Gasgenerator - Einrichtung zur Umwandlung von kinetischer und Wärmeenergie in mechanische Energie - Hydrierungsreaktor - Gasgenerator. Das Wasser wird in Dampfkesseln verdampft. Der Wasserdampf wird dann in eine Einrichtung zur Umwandlung der Wasserdampfenergie in mechanische Energie, z. B. in eine Turbine, gefördert. Die Dampfkessel werden im Gasgenerator und im Hydrierungsreaktor angeordnet. Das Wasser wird in dem letzteren erhitzt. Auf diese Weise wird ein Isothermverlauf der Vergasungs- und Hydrierungsprozesse im Gasgenerator und im Hydrierungsreaktor aufrechterhalten. Der Wasserdampf wird aus der Einrichtung zur Umwandlung der Wasserdampfenergie in mechanische Energie in einen Kondensator weitergeleitet. Von hier aus fließt das Dampfwasser in die Dampfkessel zurück. Somit entsteht ein zweiter Umlaufkreis: Dampfkessel - Einrichtung zur Umwandlung der Wasserdampfenergie in mechanische Energie - Kondensator - Dampfkessel. Dabei wird das Dampfwasser zwischen den Dampfkesseln anteilmäßig je nach ihrer Leistung verteilt. Dabei wird das Wasserstoff-Kohlenoxid-Gemisch während der Vergasung oder der Verwandlung der Kohlenwasserstofftreibstoffe im Gasgenerator unter autothermen oder thermischen Bedingungen gebildet. Gleichzeitig wird das Kohlenwasserstoff-Pyrogenwasser-Gemisch im Hydrierungsreaktor unter einem katalytischen Prozess gebildet. Dem Gasgenerator der Kraftmaschine wird reiner Sauerstoff aus einer Sauerstoffstation (Luftzerlegungsanlage) oder Sauerstoff als Luftbestandteil von einem Luftgebläse zugeführt. Dabei wird die in die Luftansaugung fließende Luft vorher je nach Klimaverhältnissen bis zum Taupunkt in einer Wärmetauscherkaskade (in den stufenartig angeordneten Wärmetauschern) abgekühlt oder erwärmt und dann bis zu einer Temperatur von 0° -3°C in einer Expansionsturbine gekühlt. Der Kühlvorgang wird wiederholt, bis ein Wasserrestgehalt der Luft von max. 0,2 g/m³ erreicht wird. Das gebildete Kondensat wird gesammelt und zur Speisung der Dampfkessel verwendet. Danach wird der Luftsauerstoff in die Sauerstoffstation oder direkt in den Gasgenerator transportiert.

Die Luft wird in der Wärmetauscherkaskade mit Kaltluft oder mit kaltem Stickstoff oder mit einem kalten Mischgas gekühlt bzw. mit Heißwasser oder Wasserdampf erwärmt. Das Kondensat wird zur Speisung der Dampfkessel verwendet.

Der Dampf wird aus dem im Hydrierungsreaktor aufgebauten Dampfkessel in die Einrichtung zur Umwandlung der Wasserdampfenergie in mechanische Energie über einen im Gasgenerator eingebauten Dampfüberhitzer gefördert.

Im Gasgenerator der Kraftmaschine wird ein Produktgas (Synthesegas) mit einem Molverhältnis H₂ : CO und H₂ : CO₂ produziert, welches für eine vollständige Rückgewinnung der Kohlenoxide erforderlich und ausreichend ist.

Bei einem Molverhältnis CO : CO₂ unter 1 wird der zusätzliche für eine Kohlendioxid-Hydrierung benötigte Wasserstoff dem Pyrogenwasser oder dem überhitzten Wasserdampf entnommen.

Ein Dampfanteil aus der Einrichtung zur Umwandlung der Wasserdampfenergie in mechanische Energie wird in den im Gasgenerator eingebauten Dampfüberhitzer weitergeleitet. Danach kommt der überhitzte Wasserdampf in die Einrichtung zur Umwandlung der Wasserdampfenergie in mechanische Energie zurück.

Ein Teil der im Hydrierungsreaktor produzierten Kohlenwasserstoffe wird von dem hergestellten Gemisch getrennt und zur weiteren Verarbeitung in eine Rektifiziersäule weitergeleitet.

Ein Ausführungsbeispiel des erfindungsgemäßen Verfahrens wird anhand der beiliegenden Zeichnungen näher erläutert. Es zeigen:
- Fig. 1: ein Übersichtsbild einer Wärmekraftmaschine zur Durchführung des beschriebenen Verfahrens zur Energieumwandlung,
- Fig. 2: ein Übersichtsbild der Wärmekraftmaschine zur Durchführung des beschriebenen Verfahrens zur Energieumwandlung mit gleichzeitiger Herstellung von chemischen Produkten in einer Rektifiziersäule und
- Fig. 3: ein Übersichtsbild der Wärmekraftmaschine zur Durchführung des beschriebenen Verfahrens zur Energieumwandlung mit einem Dampfüberhitzer, der an eine Einrichtung zur Umwandlung von Wasserdampfenergie in mechanische Energie angeschlossen ist.

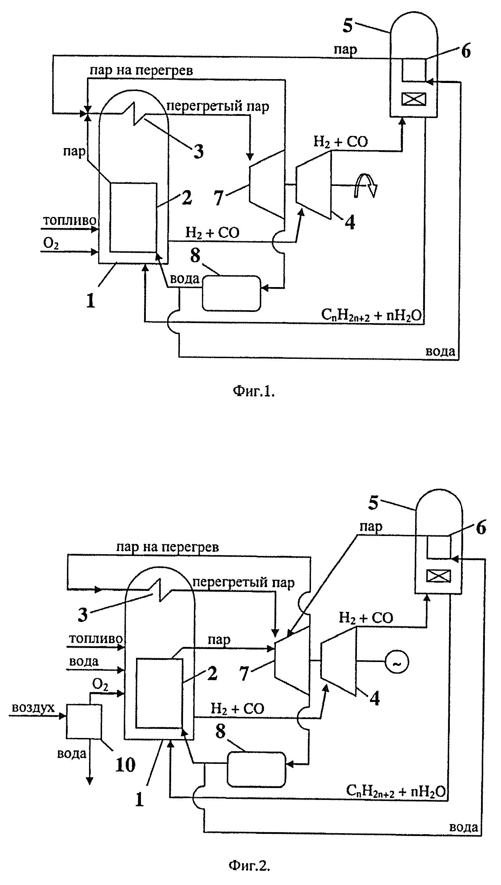

Das beschriebene Verfahren zur Energieumwandlung kann in einer Wärmekraftmaschine, z. B. in einem Verbrennungsmotor nach Fig. 1, durchgeführt werden. Die Wärmekraftmaschine enthält einen Gasgenerator 1 mit einem darin eingebauten Dampfkessel 2 und einem Dampfüberhitzer 3. Dabei ist der Gasgenerator 1 an Sauerstoff- und Kohlenwasserstofftreibstoffversorgungen angeschlossen. Die Austrittsöffnung für Wasserstoff und Kohlenoxide am Gasgenerator 1 ist auch an eine Einrichtung 4 zur Umwandlung ihrer kinetischen und Wärmeenergie in mechanische Energie, z. B. an eine Turbine, angeschlossen. Die Energieumwandlungseinrichtung 4 ist mit ihrem Austritt an einen Hydrierungsreaktor 5 angeschlossen. Im Hydrierungsreaktor 5 befindet sich ein zweiter Dampfkessel 6. Dabei ist der Austritt des zweiten Dampfkessels 6 an eine Einrichtung 7 zur Umwandlung der Wasserdampfenergie in mechanische Energie, z. B. an eine Turbine, angeschlossen. Der Austritt der Turbine ist an einen Kondensator 8 angeschlossen. Der Wasseraustritt des Kondensators 8 ist mit den Dampfkesseln 2 und 6 verbunden. Der Austritt für Kohlenwasserstoffe und Pyrogenwasser des Hydrierungsreaktors 5 ist an den Gasgenerator 1 angeschlossen.

Der zweite Dampfkessel 6 kann an eine Einrichtung 7 zur Umwandlung der Wasserdampfenergie in mechanische Energie über den Dampfüberhitzer 3 angeschlossen werden. Alternativ kann eine Dampfableitung aus der Einrichtung 7 zur Umwandlung der Wasserdampfenergie in mechanische Energie über den Dampfüberhitzer 3 an die Einrichtung 7 zur Umwandlung der Wasserdampfenergie in mechanische Energie angeschlossen werden.

Der Austritt für Kohlenwasserstoffe und Pyrogenwasser des Hydrierungsreaktors ist mit einer Rektifiziersäule 9 verbunden.

Darüber hinaus kann ein Luftgebläse oder eine Sauerstoffstation (in den Figuren nicht abgebildet) als Sauerstoffversorgung für den Gasgenerator 1 verwendet werden. (Bei einer Luftaufbereitung kann auch eine Wärmetauscherkaskade und eine Expansionsturbine (nicht abgebildet) eingesetzt werden).

Das Verfahren zur Energieumwandlung mit einer Rückgewinnung von Energieträgern in einem Kreisprozess einer Wärmekraftmaschine sieht vor, dass Kohlenwasserstofftreibstoff und Sauerstoff dem Gasgenerator 1 zugeführt werden. Hier wird der Treibstoff vergast oder unter autothermen oder thermischen Bedingungen unter Bildung von einem Wasserstoff-Kohlenoxid-Gemisch umgewandelt. Das produzierte Wasserstoff-Kohlenoxid-Gemisch fließt in die Einrichtung 4 zur Umwandlung seiner kinetischen und Wärmeenergie in mechanische Energie. Danach wird das Wasserstoff-Kohlenoxid-Gemisch in den Hydrierungsreaktor 5 weitergeleitet. Hier werden Kohlenwasserstoffe und Pyrogenwasser in einem katalytischen Prozess gebildet, die nachher in den Gasgenerator 1 zur Umwandlung befördert werden. Dabei handelt es sich um einen ersten Umlaufkreis: Gasgenerator 1 - Einrichtung 4 zur Umwandlung kinetischer und Wärmeenergie in mechanische Energie - Hydrierungsreaktor 5 - Gasgenerator 1.

In Dampfkesseln 2 und 6 wird Wasser verdampft, und der Wasserdampf wird dann in die Einrichtung 7 zur Umwandlung der Wasserdampfenergie in eine mechanische Energie, z. B. in eine Turbine, gefördert. Die Dampfkessel 2 und 6 werden jeweils im Gasgenerator 1 und im Hydrierungsreaktor 5 angeordnet. Somit wird durch die Wassererhitzung im Gasgenerator 1 und im Hydrierungsreaktor 5 ein Isothermverlauf der Vergasungs- und Hydrierungsprozesse darin aufrechterhalten. Der Wasserdampf fließt von der Einrichtung 7 zur Umwandlung der Wasserdampfenergie in mechanische Energie in den Kondensator 8. Von hier aus fließt das Dampfwasser in die Dampfkessel 2 und 6 zurück. Somit entsteht ein zweiter Umlaufkreis: Dampfkessel 2 und 6 - Einrichtung 7 zur Umwandlung der Wasserdampfenergie in mechanische Energie - Kondensator 8 - Dampfkessel 2 und 6.

Das Dampfwasser wird zwischen den Dampfkesseln 2 und 6 anteilmäßig je nach ihrer Leistung verteilt. Dabei werden ein Wasserstoff-Kohlenoxid-Gemisch im Gasgenerator 1 während der Vergasung oder Umwandlung der Kohlenwasserstofftreibstoffe unter autothermen oder thermischen Bedingungen und ein Gemisch von Kohlenwasserstoffen und Pyrogenwasser im Hydrierungsreaktor 5 während des katalytischen Prozesses gebildet.

Dem Gasgenerator 1 der Kraftmaschine werden reiner Sauerstoff aus einer Sauerstoffstation oder Luftsauerstoff von einem Luftgebläse zugeführt. Dabei wird die in die Luftansaugung fließende Luft vorher in einer Wärmetauscherkaskade bis zum Taupunkt je nach den Klimaverhältnissen abgekühlt oder erwärmt und dann bis zu einer Temperatur von 0° ... -3°C in einer Expansionsturbine gekühlt. Der Kühlvorgang wird wiederholt, bis ein Wasserrestgehalt in der Luft von max. 0,2 g/m³ erreicht wird. Das gebildete Kondensat wird gesammelt und zur Speisung der Dampfkessel 2 und 6 verwendet. Danach wird der Luftsauerstoff in die Sauerstoffstation oder direkt in den Gasgenerator 1 transportiert.

Die Luft wird in der Wärmetauscherkaskade mit Kaltluft oder mit kaltem Stickstoff oder mit einem kalten Mischgas gekühlt bzw. mit Heißwasser oder Wasserdampf erwärmt, und das Dampfwasser wird zur Speisung der Dampfkessel 2 und 6 verwendet.

Der Dampf des im Hydrierungsreaktor 5 angeordneten Dampfkessels 6 wird (s. Fig. 1) in die Einrichtung 7 zur Umwandlung der Wasserdampfenergie in mechanische Energie über den im Gasgenerator 1 eingebauten Dampfüberhitzer 3 gefördert.

Im Gasgenerator 1 der Kraftmaschine wird ein Produktgas (Synthesegas) mit einem Molverhältnis H₂ : CO und H₂ : CO₂ produziert, welches für eine vollständige Rückgewinnung der Kohlenoxide benötigt und ausreichend ist.

Liegt das Molverhältnis CO : CO₂ unter 1, so wird der für die Kohlendioxid-Hydrierung benötigte zusätzliche Wasserstoff dem Pyrogenwasser oder dem überhitzten Wasserdampf entnommen.

Ein Teil des Wasserdampfs (s. Fig. 2) wird von der Einrichtung 7 zur Umwandlung der Wasserdampfenergie in mechanische Energie in den im Gasgenerator 1 eingebauten Dampfüberhitzer 3 gefördert. Danach kommt der überhitzte Wasserdampf in die Einrichtung 7 zur Umwandlung der Wasserdampfenergie in mechanische Energie zurück.

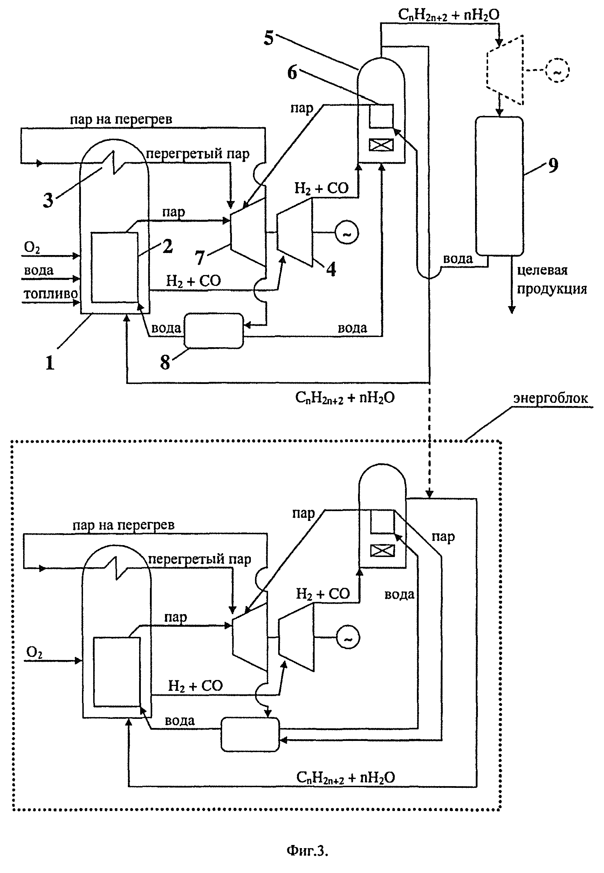

Vom Hydrierungsreaktor 5 wird ein Teil der darin erzeugten Kohlenwasserstoffe von dem produzierten Gemisch getrennt und zur weiteren Verarbeitung in eine Rektifiziersäule 9 weitergeleitet (s. Fig. 3).

Die oben beschriebenen Anlagen können gemäß der Anordnung in Fig. 3 vereinigt werden.

Als Kohlenwasserstofftreibstoffe können Gas oder flüssiger Treibstoff angewendet werden. Dabei ist Folgendes zu bemerken: Da der Wärmeinhalt seiner Oxidation in Bezug auf eine Menge von 1 Liter maximal ist, erfolgt dem Gasgenerator 1, welcher im Grunde genommen eine Brennkammer oder eine Einheit von Gasgeneratoren 1 der Kraftmaschine darstellt, die Zuführung aus einem Treibstofftank oder einer Flasche. Im Gasgenerator 1 wird ein Produktgas bei einer Temperatur von 1.625 - 2.500 K im Freiraum oder bei einer Temperatur von 785 - 1.620 K mit Katalysatoren gebildet. Beim Produktgas (Synthesegas) handelt es sich um ein Gemisch von Wasserstoff und Kohlenoxiden. Der Prozess wird bevorzugt bei einem Druck von 0,11 - 30 MPa geführt. Bei einem plasmakatalytischen Prozess wird die Plasmatemperatur im Bereich zwischen 1.700 und 10.000 K und höher eingestellt. Im Hydrierungsreaktor 5 werden Kohlenwasserstoffe mit C₁ bis C₂₅ Kohlenstoffatomen, sauerstoffhaltige Kohlenwasserstoffverbindungen C₁ bis C₄ und eventuell Wasser-dämpfe während der katalytischen Hydrierung der Kohlenoxide unter katalytischen isothermen Bedingungen gebildet. Der Prozess wird bei 3,1 MPa und bei einer Temperatur von 610 K geführt.

Der theoretische wirksame Wirkungsgrad kann 0,733 erreichen, die Carnotleistungsziffer kann bei -0,89 liegen.

Das Verfahren der Erfindung kann in der Energiewirtschaft sowie im Maschinenbau, und zwar im Kraftwagenbau oder Schiffbau, verwendet werden und ist auch in der chemischen Industrie einsetzbar, um mechanische Energie eines Turbinenwellenlaufs zu erzeugen und Transportmittel und Stromerzeuger anzutreiben und gleichzeitig verschiedene chemische Produkte unter Einsatz von z. B. Rektifiziersäulen herzustellen.

## Patentansprüche

1. Verfahren zur Umwandlung mit einer Rückgewinnung von Energieträgern in einem Kreisprozess einer Wärmekraftmaschine, bei dem Kohlenwasserstofftreibstoff und Sauerstoff einem Gasgenerator (1) zugeführt werden, und der Treibstoff vergast oder unter autothermen oder thermischen Bedingungen umgewandelt wird, so dass ein Wasserstoff-Kohlenoxid-Gemisch entsteht, wobei das produzierte Wasserstoff-Kohlenoxid-Gemisch in eine Einrichtung (4) zur Umwandlung seiner kinetischen und Wärmeenergie in mechanische Energie gefördert wird, wobei danach das Wasserstoff-Kohlenoxid-Gemisch einem Hydrierungsreaktor (5) zugeführt wird, in dem Kohlenwasserstoffe und Pyrogenwasser in einem katalytischen Prozess gebildet werden, die nachher in den Gasgenerator (1) zur Umwandlung befördert werden, so dass ein erster Umlaufkreis entsteht: Gasgenerator (1) - Einrichtung (4) zur Umwandlung der kinetischen und Wärmeenergie in mechanische Energie - Hydrierungsreaktor (5) - Gasgenerator (1) und wobei danach das Wasser in Dampfkesseln (2 und 6) verdampft wird und der Wasserdampf dann in eine Einrichtung (7) zur Umwandlung der Wasserdampfenergie in mechanische Energie, z. B. in eine Turbine, gefördert wird,
**dadurch gekennzeichnet,**
**dass** die Dampfkessel (2, 6) im Gasgenerator (1) und im Hydrierungsreaktor (5) angeordnet werden und dass auf diese Weise mittels Wassererhitzung im Gasgenerator (1) und im Hydrierungsreaktor (5) ein Isothermverlauf der Vergasungs- und Hydrierungsprozesse im Gasgenerator (1) und im Hydrierungsreaktor (5) aufrechterhalten wird,
**dass** der Wasserdampf von der Einrichtung (7) zur Umwandlung der Wasserdampfenergie in mechanische Energie in einen Kondensator (8) weitergeleitet wird und dass das Dampfwasser von hier aus in die Dampfkessel (2, 6) zurückfließt, so dass somit ein zweiter Umlaufkreis entsteht: Dampfkessel (2, 6) - Einrichtung (7) zur Umwandlung der Wasserdampfenergie in mechanische Energie - Kondensator (8) - Dampfkessel (2, 6),
**dass** das Dampfwasser dabei zwischen den Dampfkesseln (2, 6) anteilmäßig je nach ihrer Leistung verteilt wird,
**dass** dabei ein Wasserstoff-Kohlenoxid-Gemisch während der Vergasung oder der Verwandlung der Kohlenwasserstofftreibstoffe im Gasgenerator (1) unter autothermen oder thermischen Bedingungen gebildet wird,
**dass** gleichzeitig ein Kohlenwasserstoff-Pyrogenwasser-Gemisch im Hydrierungsreaktor (5) unter einem katalytischen Prozess gebildet wird,
**dass** dem Gasgenerator (1) der Kraftmaschine reiner Sauerstoff aus einer Sauerstoffstation oder Luftsauerstoff von einem Luftgebläse zugeführt werden, dass die in die Luftansaugung fließende Luft dabei vorher in einer Wärmetauscherkaskade je nach Klimaverhältnissen bis zum Taupunkt abgekühlt oder erwärmt und dann bis zu einer Temperatur von 0° ... -3°C in einer Expansionsturbine gekühlt wird,
**dass** der Kühlvorgang bis zum Erreichen eines Wasserrestgehalts in der Luft von max. 0,2 g/m³ wiederholt wird,
**dass** das gebildete Kondensat gesammelt und zur Speisung der Dampfkessel (2, 6) verwendet wird und
**dass** danach der Luftsauerstoff in die Sauerstoffstation oder direkt in den Gasgenerator (1) transportiert wird.

2. Verfahren nach Anspruch 1,
**dadurch gekennzeichnet,**
**dass** die Luft in der Wärmetauscherkaskade mit Kaltluft oder mit kaltem Stickstoff oder mit einem kalten Mischgas gekühlt bzw. mittels eines Heißwassers oder Wasserdampfs erwärmt wird und
**dass** das Kondensat zur Speisung der Dampfkessel (2, 6) verwendet wird.

3. Verfahren nach Anspruch 1,
**dadurch gekennzeichnet,**
**dass** der Dampf aus dem im Hydrierungsreaktor (5) aufgebauten Dampfkessel in die Einrichtung (7) zur Umwandlung der Wasserdampfenergie in mechanische Energie über einen im Gasgenerator (1) eingebauten Dampfüberhitzer (3) gefördert wird.

4. Verfahren nach Anspruch 1,
**dadurch gekennzeichnet,**
**dass** im Gasgenerator der Kraftmaschine ein Produktgas mit einem Molverhältnis H₂ : CO und H₂ : CO₂ produziert wird, welches für eine vollständige Rückgewinnung der Kohlenoxide benötigt und ausreichend ist.

5. Verfahren nach Anspruch 1,
**dadurch gekennzeichnet,**
**dass** bei einem Molverhältnis CO : CO₂ unter 1 der für die Hydrierung von Kohlendioxid benötigte zusätzliche Wasserstoff dem Pyrogenwasser oder dem überhitzten Wasserdampf entnommen wird.

6. Verfahren nach Anspruch 1,
**dadurch gekennzeichnet,**
**dass** ein Teil des Wasserdampfs von der Einrichtung (7) zur Umwandlung der Wasserdampfenergie in mechanische Energie in den im Gasgenerator (1) eingebauten Dampfüberhitzer (3) weitergeleitet wird und
**dass** der überhitzte Wasserdampf danach in die Einrichtung (7) zur Umwandlung der Wasserdampfenergie in mechanische Energie zurück gelangt.

7. Verfahren nach Anspruch 1,
**dadurch gekennzeichnet,**
**dass** ein Teil der im Hydrierungsreaktor produzierten Kohlenwasserstoffe von dem hergestellten Gemisch getrennt und zur weiteren Verarbeitung in eine Rektifiziersäule (9) weitergeleitet wird.
